# EUROPEAN PATENT APPLICATION

(11) **EP 4 776 257 A1**
(43) Date of publication of application: **15.07.2026**
(21) Application number: 24862012.2
(22) Date of filing: 05.09.2024
(51) Int. Cl.: G08B 17/10, H01M 10/48, H01M 50/289

(54) **FIRE DETECTOR AND BATTERY PACK**

(30) Priority: 07.09.2023 CN 202322430337 U
(71) Applicant: Zephyr Intelligent System (Shanghai) Co., Ltd., Shanghai 201206 (CN)
(72) Inventor: ZHAO, Shiqing, Shanghai 201206 (CN); LI, Fei, Shanghai 201206 (CN)
(74) Representative: De Arpe Tejero, Manuel
(86) International application number: PCT/CN2024/117008
(87) International publication number: WO 2025/051172

(57) **Abstract**

A fire detector and a battery pack are provided, wherein the fire detector comprises a mounting end cover (1), a fire sensing assembly (2), and a protective cover (3), the mounting end cover (1) is configured to be detachably disposed outside a battery pack body (100), the fire sensing assembly (2) is located inside the battery pack body (100) and detachably connected to the mounting end cover (1), the protective cover (3) is detachably connected to a side of the mounting end cover (1) where the fire sensing assembly (2) is disposed, the protective cover (3) covers the fire sensing assembly (2), the protective cover (3) is provided with a detection hole (31), and the inside of the battery pack body (100) and the inside of the protective cover (3) are in communication through the detection hole (31).

## Description

### CROSS-REFERENCE TO RELATED APPLICATIONS

This application claims the priority of a Chinese patent application filed with the China National Intellectual Property Administration on September 7, 2023, with Application No. 202322430337.3, and the entire content of the above application is incorporated herein by reference.

### TECHNICAL FIELD

This application relates to the field of fire detection technology, for example, to a fire detector and a battery pack.

### BACKGROUND

A fire detector is a device in an automatic fire alarm system used to scout a site and detect fires. Once a fire occurs, the fire detector can convert fire signals such as temperature, smoke, gas, and radiant light intensity into electrical signals, and immediately act to send an alarm signal to a fire alarm controller, reminding on-site personnel to quickly report the fire and evacuate in a timely manner, so as to minimize losses and prevent the disaster. The fire detector can monitor data such as the temperature, carbon monoxide, hydrogen, and Volatile Organic Compounds (VOC) of smoke in the environment with high precision, and can realize timely and effective early warning for abnormal conditions through data analysis and processing algorithms, while reducing the occurrence of false alarms. When necessary, it can drive a valve output to perform fire extinguishing, and maintain communication with an Electronic Control Unit (ECU) in a normal working mode.

The fire detector has the characteristics of mature technology, convenient installation, and simple maintenance, so it has gradually become an effective technical means for people to deal with disasters in various types of residential, factory, and medical places. In addition, fire detectors are also widely used in batteries and other aspects. By arranging a fire detector in a battery pack, early warning can be issued in the early stage of a fire and necessary prevention and control measures can be taken, effectively avoiding safety accidents caused by battery thermal runaway, which is of great significance for maintaining vehicle and personnel safety.

However, the fire detector in the related art is usually installed inside a battery pack, and the battery pack has a sealed structure. During subsequent maintenance and repair, the sealed structure needs to be opened to replace the fire detector or its components, which is cumbersome and complicated. For a small number of fire detectors installed externally, due to structural limitations and other reasons, the protective cover can only be separated from the main body of the fire detector, causing the fire sensing assembly of the fire detector to be exposed and easily damaged during transportation, thus rendering the fire detector unusable and bringing great safety hazards to the battery pack.

### SUMMARY

The present application provides a fire detector and a battery pack, wherein the fire detector is easy to maintain and replace, has a complete structure, and can improve the reliability of the fire detector.

The fire detector comprises a mounting end cover configured to be detachably disposed outside a battery pack body, a fire sensing assembly located inside the battery pack body and detachably connected to the mounting end cover, and a protective cover detachably connected to a side of the mounting end cover where the fire sensing assembly is disposed, wherein the protective cover covers the fire sensing assembly, the protective cover is provided with a detection hole, and the detection hole is configured to connect the inside of the battery pack body and the inside of the protective cover.

Optionally, the fire detector further comprises an external connection assembly comprising a harness, wherein a first end of the harness is provided with a terminal, the mounting end cover is provided with a wire inlet hole, the terminal passes through the wire inlet hole to connect to the fire sensing assembly, and a second end of the harness is configured to connect to an external circuit.

Optionally, the external connection assembly further comprises a waterproof joint disposed on the harness and located at an opening of the wire inlet hole, and a first seal is provided between the waterproof joint and the mounting end cover.

Optionally, the fire sensing assembly comprises a first circuit board configured to analyze and process smoke data and a second circuit board configured to convert the smoke data, the first circuit board is provided with a socket for mating connection with the terminal, and the second circuit board is in signal communication with the first circuit board via a connector.

Optionally, the first circuit board is detachably disposed on the mounting end cover, and the second circuit board is detachably disposed on the first circuit board.

Optionally, the fire sensing assembly further comprises a sensing labyrinth detachably disposed on the second circuit board, and a chip configured to sense a fire is provided inside the sensing labyrinth.

Optionally, the sensing labyrinth is provided with a first locking member and a first mounting hole, the second circuit board is provided with a first locking slot and a first connecting hole, the first locking member is locked in the first locking slot, and the sensing labyrinth and the second circuit board are configured to be connected via a first connecting member passing through the first mounting hole and the first connecting hole in sequence.

Optionally, a groove is provided on the first circuit board and the second circuit board, an anti-misalignment rib is protruded from the mounting end cover, and the anti-misalignment rib is locked in the groove; or an anti-misalignment rib is provided on the first circuit board and the second circuit board, a groove is provided on the mounting end cover, and the anti-misalignment rib is locked in the groove.

Optionally, a second locking member is protruded from the mounting end cover, a second locking slot is provided on the protective cover, and the second locking member is connected to the second locking slot to achieve connection between the protective cover and the mounting end cover; or a second locking slot is provided on the mounting end cover, a second locking member is protruded from the protective cover, and the second locking member is connected to the second locking slot to achieve connection between the protective cover and the mounting end cover.

The present application also provides a battery pack comprising a battery pack body and the above-mentioned fire detector, wherein a second mounting hole is provided on the battery pack body, the protective cover and the fire sensing assembly pass through the second mounting hole to be located inside the battery pack body, the mounting end cover and the battery pack body are configured to be connected via a second connecting member, and a second seal is provided between the mounting end cover and the battery pack body.

### BRIEF DESCRIPTION OF THE DRAWINGS

FIG. 1 is a structural schematic diagram of a fire detector provided by an embodiment of the present application;
FIG. 2 is a structural schematic diagram of a mounting end cover of the fire detector provided by an embodiment of the present application;
FIG. 3 is a structural schematic diagram of a protective cover of the fire detector provided by an embodiment of the present application;
FIG. 4 is a structural schematic diagram of a fire sensing assembly provided by an embodiment of the present application;
FIG. 5 is a cross-sectional view of the installation of a sensing labyrinth provided by an embodiment of the present application;
FIG. 6 is a cross-sectional view of a battery pack provided by an embodiment of the present application;
FIG. 7 is a schematic diagram of a terminal provided by an embodiment of the present application;
FIG. 8 is a schematic diagram of a first seal provided by an embodiment of the present application;
FIG. 9 is a schematic diagram of a first connecting member provided by an embodiment of the present application;
FIG. 10 is a schematic diagram of a second connecting member provided by an embodiment of the present application;
FIG. 11 is a schematic diagram of a sensing labyrinth provided by an embodiment of the present application;
FIG. 12 is a schematic diagram of a chip provided by an embodiment of the present application.

Reference numerals:
100: Battery pack body; 1001: Second mounting hole; 1002: Third connecting hole;
1: Mounting end cover; 11: Wire inlet hole; 12: Anti-misalignment rib; 13: Second locking member; 14: Stress relief groove; 15: Second connecting hole;
2: Fire sensing assembly; 21: First circuit board; 211: Socket; 22: Second circuit board; 221: First locking slot; 222: First connecting hole; 23: Sensing labyrinth; 231: First locking member; 232: First mounting hole; 24: Groove;
3: Protective cover; 31: Detection hole; 32: Second locking slot;
4: External connection assembly; 41: Harness; 42: Waterproof joint;
5: First connecting post; 6: Second seal; 7: Second connecting post;
8: Terminal; 9: First seal; 10: First connecting member; 16: Second connecting member; 17: Chip

### DETAILED DESCRIPTION

The present application will be described below with reference to the accompanying drawings and embodiments. The specific embodiments described herein are merely for explaining the present application and are not intended to limit the present application. For ease of description, the drawings only show parts related to the present application, not the entire structure.

The present application provides a fire detector that can scout the internal conditions of a battery pack and is installed externally to issue an alarm in time to avoid the occurrence of a disaster or minimize losses.

The fire detector is not only applicable to battery packs but also to any enclosed structure that requires fire monitoring. In the following embodiments, for ease of description, the fire detector is described as being mounted on the outside of a battery pack.

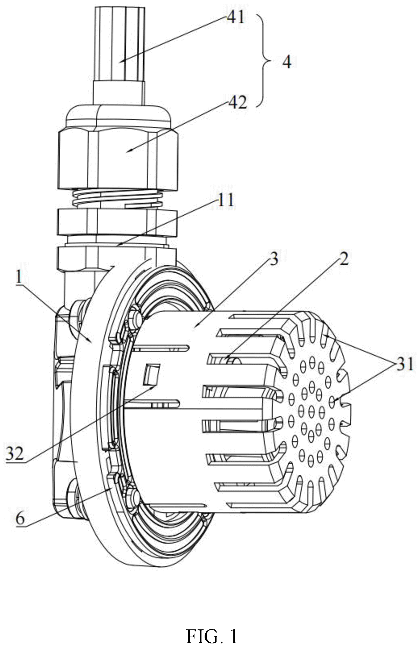

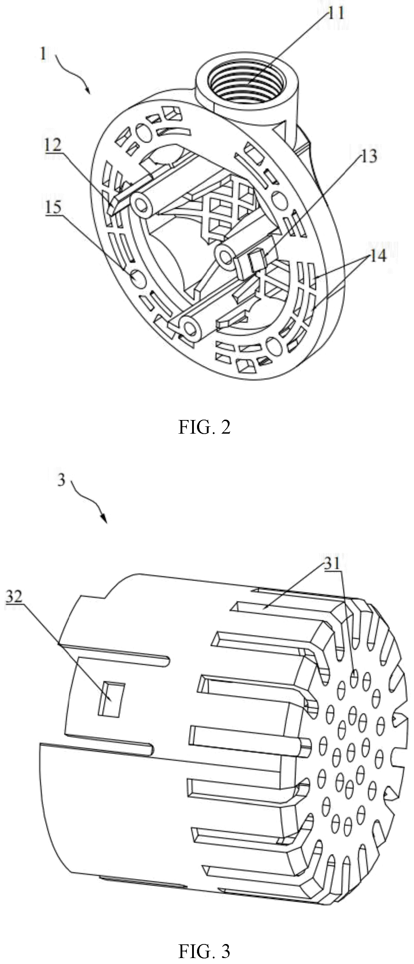

As shown in FIG. 1, the fire detector comprises a mounting end cover 1, a fire sensing assembly 2, and a protective cover 3. The mounting end cover 1 is disposed outside a battery pack body 100 and is detachably connected to the battery pack body 100. The fire sensing assembly 2 is detachably connected to the mounting end cover 1. The fire sensing assembly 2 is located inside the battery pack body 100 and is configured to sense smoke inside the battery pack body 100, convert fire signals such as temperature, gas concentration, and radiant light intensity into electrical signals, and send out a reminder. By disposing the mounting end cover 1 outside the battery pack body 100, external installation of the fire detector can be achieved, allowing the fire detector to be replaced directly from the outside during maintenance, which is not only convenient and quick but also does not affect the internal structure of the battery pack body 100 during replacement and repair. The mounting end cover 1 is generally manufactured using an injection molding process. In order to avoid shrinkage during the injection molding of the mounting end cover 1, as shown in FIG. 2, a stress relief groove 14 is provided on the mounting end cover 1 to release stress and ensure the flatness of the mounting end cover 1. The number of stress relief grooves 14 can be set to multiple according to actual conditions.

The protective cover 3 is disposed on the side of the mounting end cover 1 where the fire sensing assembly 2 is located. For ease of inspection and replacement, the protective cover 3 is detachably connected to the mounting end cover 1. The protective cover 3 covers the fire sensing assembly 2. The protective cover 3 is provided with a detection hole 31, and the inside of the battery pack body 100 is in communication with the inside of the protective cover 3 through the detection hole 31. Since the fire sensing assembly 2 is exceptionally sensitive and can be easily affected by external environments such as dust, and can also be easily bumped and fail or be damaged during transportation and installation, providing the protective cover 3 outside the fire sensing assembly 2 can also protect the fire sensing assembly 2 and prevent external factors from affecting the use of the fire detector.

In order to ensure that smoke contacts the fire sensing assembly 2 in a timely manner, a plurality of detection holes 31 are generally provided, spaced apart from each other. In some embodiments, the detection holes 31 can be configured as round holes. In some embodiments, the detection holes 31 can also be configured as a grille. In other embodiments, as shown in FIG. 1, both round holes and a grille can be provided on the protective cover 3.

In order to install the protective cover (3) and the mounting end cover (1), as shown in FIGS. 2 and 3, a second locking member (13) is protruded from the mounting end cover (1), and a second locking slot (32) is provided on the protective cover (3). The second locking member (13) is connected to the second locking slot (32) to achieve the connection between the protective cover (3) and the mounting end cover (1). In some other embodiments, the second locking slot (32) can also be provided on the mounting end cover (1), and the second locking member (13) can be provided on the protective cover (3). The protective cover (3) and the mounting end cover (1) are connected by locking the second locking member (13) into the second locking slot (32). The number of the second locking slots (32) and the second locking members (13) can be set to multiple; the greater the number, the more stable the connection between the protective cover (3) and the mounting end cover (1).

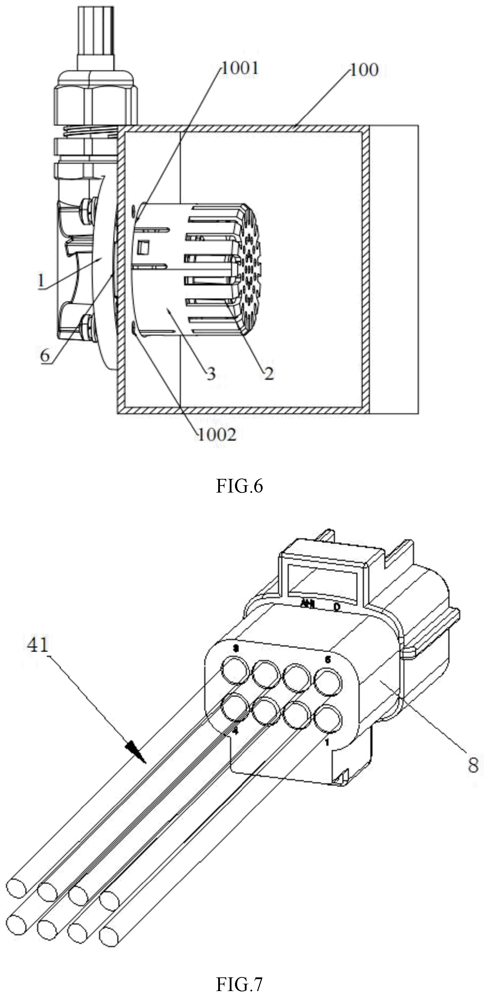

In order to transmit information to the outside and issue a warning signal to the outside, the fire detector further comprises an external connection assembly (4). As shown in FIGS. 1 and 7, the external connection assembly (4) comprises a harness (41) configured for circuit connection to the outside. world. A first end of the harness (41) is provided with a terminal (8) connected to the fire sensing assembly (2), and a second end of the harness (41) is connected to an external circuit.1. In some embodiments, as shown in FIGS. 1 and 2, the mounting end cover (1) is provided with a wire inlet hole (11), and the terminal (8) passes through the wire inlet hole (11) to connect to the fire sensing assembly (2).

In order to prevent the fire detector from being soaked by water and thus becoming ineffective, the fire detector is also provided with waterproof measures. As shown in FIG. 1, the external connection assembly (4) further comprises a waterproof joint (42) disposed on the harness (41) and located at the opening of the wire inlet hole (11). The waterproof joint (42) comprises a connection terminal and two adjustable waterproof members screwed onto the connection terminal. The adjustable waterproof members are configured to adjust the size of the opening at their own ports to prevent liquid from entering the inside of the connection terminal. In some embodiments, the wire inlet hole (11) is a threaded hole, and the waterproof joint (42) can be screwed into the wire inlet hole (11). The waterproof joint (42) is a common component well-known in the mechanical field, so the specific structure thereof will not be described in detail in this embodiment.

When the harness (41) needs to be waterproofed, the harness (41) needs to be first disconnected by shearing or the like, forming two breaks. A connection terminal is connected to each break, and the two connection terminals can be plugged together to re-connect the harness (41). Then, the adjustable waterproof member is threaded onto the harness (41), and the adjustable waterproof member is tightened to be firmly connected to the side of the connection terminal away from the break. The size of the opening at the port of the adjustable waterproof member is adjusted to tightly wrap around the outside of the harness (41), achieving the waterproof effect for the harness (41) at the wire inlet hole (11).

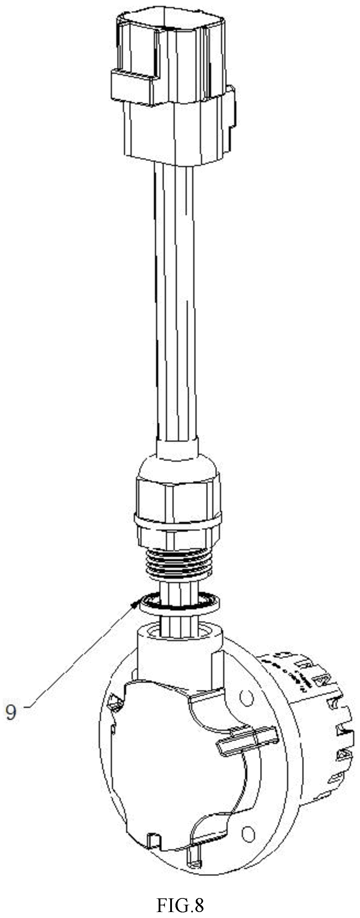

In order to further enhance the waterproof effect at the wire inlet hole (11) and avoid affecting the operation of the fire sensing assembly (2) disposed on the other side of the mounting end cover (1), a first seal (9) is further provided between the waterproof joint (42) and the mounting end cover (1). As shown in FIG. 8, the first seal (9) ensures the sealing performance of the fire detector during normal use. In some embodiments, the first seal (9) can be a sealing gasket. In some other embodiments, the first seal (9) can also be a sealing gasket plate, sealant, or the like. The type of the first seal (9) can be selected according to requirements and use conditions, as long as it fulfills its sealing function.

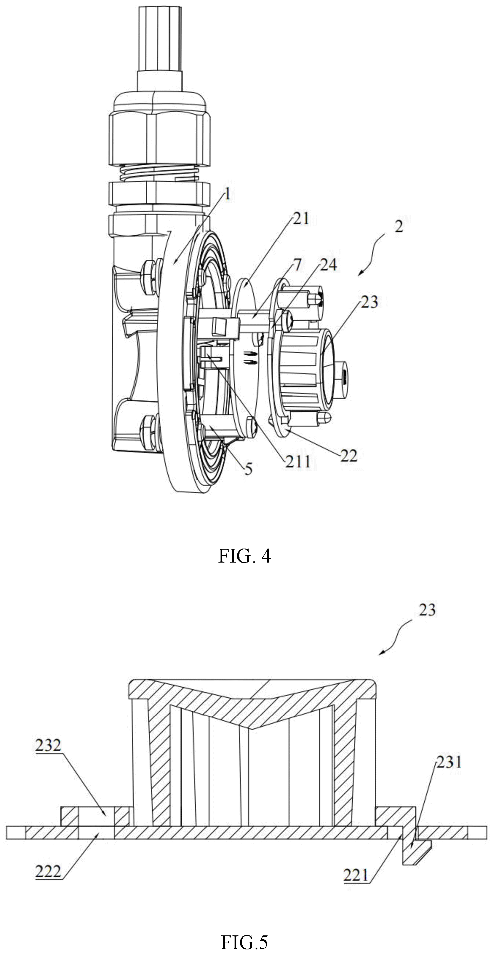

During the operation of the fire detector, functions such as detecting a fire, analyzing data, transmitting data, and sending an alarm signal are all implemented by the fire sensing assembly (2). As shown in FIG. 4, the fire sensing assembly (2) comprises a first circuit board (21) and a second circuit board (22). The first circuit board (21) is configured to analyze smoke data inside the battery pack body (100). The second circuit board (22) is configured to detect smoke data and convert the collected smoke data in the environment into data such as temperature, carbon monoxide concentration, and hydrogen concentration, so that the first circuit board (21) can analyze and process the data. The second circuit board (22) and the first circuit board (21) are in signal communication through a connector to achieve information transmission. The first circuit board (21) is provided with a socket (211) that mates with the terminal (8) of the harness (41), enabling the transmission of signals that have undergone data analysis and processing algorithms to the outside, thus realizing timely and effective early warning for abnormal conditions.

For ease of maintenance, the first circuit board (21) is detachably disposed on the mounting end cover (1). A first connecting post (5) is protruded from the mounting end cover (1), and the first circuit board (21) and the first connecting post (5) are connected by screws.2. In some embodiments, the second circuit board (22) is detachably stacked on the first circuit board (21). This arrangement can convert planar space into three-dimensional space, saving occupied area, avoiding the mounting end cover (1) from being too large, and also enabling the fire detector to be applicable to battery packs with smaller volumes. A second connecting post (7) is protruded from the first circuit board (21), and the second circuit board (22) and the second connecting post (7) are connected by screws. In some other embodiments, the second circuit board (22) is detachably disposed on the mounting end cover (1).

As shown in FIGS. 2 and 4, a groove (24) is provided on the first circuit board (21) and the second circuit board (22), and an anti-misalignment rib (12) is protruded from the mounting end cover (1). The anti-misalignment rib (12) is locked in the groove (24). The provision of the groove (24) and the anti-misalignment rib (12) can improve the accuracy of installation and facilitate the automated production of the fire detector. In some other embodiments, anti-misalignment holes can also be provided on the first circuit board (21) and the second circuit board (22) to prevent installation errors. In some other embodiments, the positions of the anti-misalignment rib (12) and the groove (24) can also be swapped, i.e., the anti-misalignment rib (12) is provided on the first circuit board (21) and the second circuit board (22), and the groove (24) is provided on the mounting end cover (1). The anti-misalignment rib (12) is locked in the groove (24) to improve the accuracy of installation.

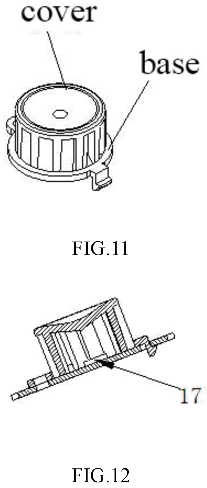

As shown in FIG. 5, the fire sensing assembly (2) further comprises a sensing labyrinth (23) configured to acquire fire information inside the battery pack body (100). As shown in FIGS. 11 and 12, the sensing labyrinth (23) comprises a base and a cover. The cover is provided with an opening, at which a baffle for guiding smoke into the inside is provided. The cover is buckled onto the base, and a sensing chamber is formed between the cover and the base. A chip (17) configured to detect smoke is provided in the sensing chamber. In some embodiments, the sensing labyrinth (23) is detachably disposed on the mounting end cover (1). In some other embodiments, to control the size of the fire detector from being too large, the sensing labyrinth (23) can also be disposed on the second circuit board (22).

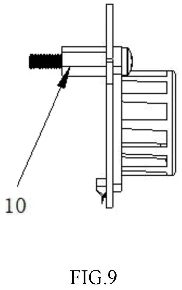

In order to balance the installation stability and the convenience of disassembly and assembly of the sensing labyrinth (23), as shown in FIG. 5, the sensing labyrinth (23) is provided with a first locking member (231) and a first mounting hole (232). The first mounting hole (232) and the first locking member (231) are provided on the base of the sensing labyrinth (23). The second circuit board (22) is provided with a first locking slot (221) and a first connecting hole (222). When installing the sensing labyrinth (23), the first locking member (231) is locked in the first locking slot (221) to fix one end of the base of the sensing labyrinth (23). The first connecting member (10) passes through the first mounting hole (232) and the first connecting hole (222) in sequence to connect the sensing labyrinth (23) and the second circuit board (22), so that the sensing labyrinth (23) is stably connected to the second circuit board (22), as shown in FIG. 9. In some embodiments, the first connecting member (10) can be a screw or a bolt. This arrangement can not only ensure the firmness of the connection of the sensing labyrinth (23) but also improve the convenience of replacement and disassembly.

The number of the first locking members (231) and the first mounting holes (232) can be set to multiple to further improve the stability of the installation of the sensing labyrinth (23). In some other embodiments, a plurality of first locking members (231) can be provided only on the base of the sensing labyrinth (23) for installation, or a plurality of first mounting holes (232) can be provided only on the base of the sensing labyrinth (23) for installation.

For ease of maintenance and replacement, the first circuit board (21), the second circuit board (22), and the sensing labyrinth (23) are usually detachably disposed. However, in individual embodiments, the first circuit board (21), the second circuit board (22), and the sensing labyrinth (23) can also be integrally connected with other accessories.

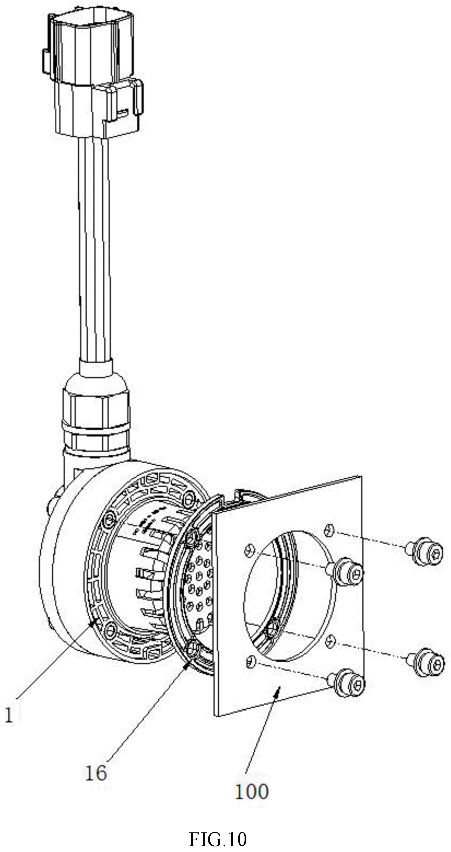

The present application also provides a battery pack. As shown in FIGS. 1 and 6, the battery pack comprises the above-mentioned fire detector and a battery pack body (100). A second mounting hole (1001) is provided on the battery pack body (100). The protective cover (3) and the fire sensing assembly (2) pass through the second mounting hole (1001) to be located inside the battery pack body (100). A second connecting hole (15) is provided on the mounting end cover (1), and a third connecting hole (1002) is provided on the battery pack body (100). As shown in FIG. 10, a second connecting member (16) passes through the second connecting hole (15) and the third connecting hole (1002) in sequence to connect the mounting end cover (1) and the battery pack body (100). In some embodiments, the second connecting member (16) can be a screw or a bolt. To ensure the firmness of the connection between the fire detector and the battery pack body (100), a plurality of second connecting members (16) are provided. To ensure the sealing of the inside of the battery pack body (100), a second seal (6) is further provided between the mounting end cover (1) and the battery pack body (100). A third seal can also be provided between the second connecting member (16) and the mounting end cover (1). In some embodiments, the second seal (6) and the third seal can be sealing gaskets. In some other embodiments, the second seal (6) and the third seal can also be sealing gasket plates, sealants, or the like. The types of the second seal (6) and the third seal can be selected according to requirements and use conditions, as long as they achieve their sealing effect.

The fire detector provided by the present application comprises a mounting end cover, a fire sensing assembly, and a protective cover. The mounting end cover is detachably connected to the outside of a battery pack body. The fire sensing assembly is located inside the battery pack body and is detachably connected to the mounting end cover. The protective cover is detachably connected to the side of the mounting end cover where the fire sensing assembly is located. The protective cover covers the fire sensing assembly and is provided with a detection hole. The inside of the battery pack body and the inside of the protective cover are in communication through the detection hole. The fire detector can be disassembled and assembled from the outside, which not only facilitates the replacement and maintenance of the fire detector and effectively improves work efficiency but also does not require opening the battery pack during maintenance and replacement, thus not affecting the internal structure of the battery pack. In addition, providing the protective cover outside the fire sensing assembly can also effectively ensure the safety and effectiveness of the fire detector.

The battery pack provided by the present application is equipped with the fire detector and can constantly monitor and scout for fire conditions inside the battery pack. When a fire occurs, it can send a warning to the outside in time. The battery pack allows for external disassembly and assembly of the fire detector. During maintenance, the fire detector can be replaced directly from the outside, which is not only convenient and quick but also does not affect the internal structure of the battery pack.

In the description of the present application, unless otherwise explicitly specified and limited, the terms "connected," "connected to," and "fixed" should be understood in a broad sense. For example, they can be a fixed connection, a detachable connection, or an integral connection; they can be a mechanical connection or an electrical connection; they can be a direct connection or an indirect connection through an intermediate medium, and can be the internal communication between two elements or the interaction relationship between the two elements. A person of ordinary skill in the art can understand the specific meanings of the above terms in the present application according to the specific circumstances.

In the present application, unless otherwise explicitly specified and limited, a first feature being "on" or "under" a second feature can include the first feature and the second feature being in direct contact, and can also include the first feature and the second feature not being in direct contact but being in contact through another feature between them. Moreover, a first feature being "above," "over," and "on top of" a second feature includes the first feature being directly above and obliquely above the second feature, or simply means that the horizontal height of the first feature is greater than that of the second feature. A first feature being "under," "below," and "beneath" a second feature includes the first feature being directly below and obliquely below the second feature, or simply means that the horizontal height of the first feature is less than that of the second feature.

In the description of this embodiment, the orientation or positional relationship of terms such as "upper," "lower," "right," and "left" is based on the orientation or positional relationship shown in the drawings, which is only for the convenience of description and simplifying the operation, and does not indicate or imply that the referred device or element must have a specific orientation, be constructed and operated in a specific orientation, and therefore cannot be understood as a limitation of the present application. In addition, the terms "first" and "second" are only used for distinction in description and have no special meaning.

## Claims

1. A fire detector comprising:
a mounting end cover (1), configured to be detachably disposed outside a battery pack body (100);
a fire sensing assembly (2), located inside the battery pack body (100) and detachably connected to the mounting end cover (1); and
a protective cover (3), detachably connected to a side of the mounting end cover (1) on which the fire sensing assembly (2) is disposed, wherein the protective cover (3) covers the fire sensing assembly (2) and is provided with a detection hole (31) configured to connect the inside the battery pack body (100) and the inside the protective cover (3).

2. The fire detector according to claim 1, further comprising an external connection assembly (4) comprising a harness (41), wherein a first end of the harness (41) is provided with a terminal (8), the mounting end cover (1) is provided with a wire inlet hole (11), the terminal (8) passes through the wire inlet hole (11) to connect to the fire sensing assembly (2), and a second end of the harness (41) is configured to connect to an external circuit.

3. The fire detector according to claim 2, wherein the external connection assembly (4) further comprises a waterproof joint (42) disposed on the harness (41) and located at an opening of the wire inlet hole (11), and a first seal (9) is provided between the waterproof joint (42) and the mounting end cover (1).

4. The fire detector according to claim 2, wherein the fire sensing assembly (2) comprises a first circuit board (21) configured to analyze and process smoke data and a second circuit board (22) configured to convert the smoke data, the first circuit board (21) is provided with a socket (211) for in mating connection with the terminal (8), and the second circuit board (22) is in signal communication with the first circuit board (21) via a connector.

5. The fire detector according to claim 4, wherein the first circuit board (21) is detachably disposed on the mounting end cover (1), and the second circuit board (22) is detachably disposed on the first circuit board (21).

6. The fire detector according to claim 5, wherein the fire sensing assembly (2) further comprises a sensing labyrinth (23) detachably disposed on the second circuit board (22), and a chip (17) configured to sense a fire is provided inside the sensing labyrinth (23).

7. The fire detector according to claim 6, wherein the sensing labyrinth (23) is provided with a first locking member (231) and a first mounting hole (232), the second circuit board (22) is provided with a first locking slot (221) and a first connecting hole (222), the first locking member (231) is locked in the first locking slot (221), and the sensing labyrinth (23) is connected to the second circuit board (22) via a first connecting member (10), the first connecting member (10) passes through the first mounting hole (232) and the first connecting hole (222) in sequence.

8. The fire detector according to claim 5, wherein a groove (24) is provided on the first circuit board (21) and the second circuit board (22), an anti-misalignment rib (12) is provided on the mounting end cover (1), and the anti-misalignment rib (12) is locked in the groove (24); or
an anti-misalignment rib (12) is provided on the first circuit board (21) and the second circuit board (22), a groove (24) is provided on the mounting end cover (1), and the anti-misalignment rib (12) is locked in the groove (24).

9. The fire detector according to claim 1, wherein a second locking member (13) is provided on the mounting end cover (1), a second locking slot (32) is provided on the protective cover (3), and the second locking member (13) is in mating connection with the second locking slot (32) to achieve a connection between the protective cover (3) and the mounting end cover (1); or
a second locking slot (32) is provided on the mounting end cover (1), a second locking member (13) is provided on the protective cover (3), and the second locking member (13) is in mating connection with the second locking slot (32) to achieve a connection between the protective cover (3) and the mounting end cover (1).

10. A battery pack comprising a battery pack body (100) and the fire detector according to any one of claims 1-9, wherein a second mounting hole (1001) is provided on the battery pack body (100), the protective cover (3) and the fire sensing assembly (2) pass through the second mounting hole (1001) to be located inside the battery pack body (100), the mounting end cover (1) is connected to the battery pack body (100) via a second connecting member (16), and a second seal (6) is provided between the mounting end cover (1) and the battery pack body (100).
